Europäisches Patentamt

(19) European Patent Office (11) Publication number: **0 074 230**

Office européen des brevets **B1**

(12) **EUROPEAN PATENT SPECIFICATION**

(45) Date of publication of patent specification: **04.06.86** (51) Int. Cl.⁴: **A 01 M 21/04**

(21) Application number: **82304536.4**

(22) Date of filing: **27.08.82**

(54) Herbicidal applicators.

(30) Priority: **04.09.81 AU 601/81**

(43) Date of publication of application:
**16.03.83 Bulletin 83/11**

(45) Publication of the grant of the patent:
**04.06.86 Bulletin 86/23**

(84) Designated Contracting States:
**AT BE CH DE FR GB IT LI LU NL SE**

(56) References cited:
**AU-B- 463 851**
**GB-A- 237 278**
**GB-A- 898 669**
**US-A-3 464 629**
**US-A-4 027 986**
**US-A-4 208 835**
**US-A-4 219 964**
**US-A-4 285 160**

(73) Proprietor: **Baumber, Donald Eric**
**46 Greenacre Road**
**South Hurstville New South Wales 2221 (AU)**

(72) Inventor: **Baumber, Donald Eric**
**46 Greenacre Road**
**South Hurstville New South Wales 2221 (AU)**

(74) Representative: **Cheyne, John Robert Alexander**
**Mackenzie et al**
**HASELTINE LAKE & CO. 28 Southampton**
**Buildings Chancery Lane**
**London WC2A 1AT (GB)**

Courier Press, Leamington Spa, England.

## Description

This invention relates to improvements in wet-rope or rope-wick applicators especially for applying herbicides to weeds, and to improved methods of applying herbicides.

The applicators of the invention can be used to apply any type of liquid or solution to growing plants. The applicators are especially suited to applying herbicides to weeds in a growing crop where the weeds are taller than the crop.

Australian Registered Designs Nos. 84 620, 84 659, 84 660, 84 661, 84 685, 84 656 and 84 687 illustrate hand-held wet-rope applicators in which a rope-wick is supplied from a tubular reservoir by gravity feed.

United States Patents Nos. 4 187 638 and 4 219 964 disclose rope-wick applicators in which rope-wicks are woven through holes in cylindrical reservoirs, the wicks draw herbicide from the reservoirs by capilliary action. The cylindrical reservoirs are supported by a boom and drawn by a tractor or the like to bring the wicks into physical contact with the weeds and the herbicide or herbicide solution is wiped on to the weeds from the wick.

United States Patents Nos. 1 368 123, 1 523 590, 1 764 952, 1 818 369, 2 123 988, 2 311 782, 2 458 027, 2 530 234, 2 769 668, 2 979 757, 2 946 154, 3 002 319, 3 021 642, 3 077 701, 3 184 888, 4 027 986, 4 291 491 and 4 305 224; and 910 933, 1 109 060 and 1 527 669 all dislose herbicide or liquid applicators having a reservoir which feeds liquid to a rope-wick, the liquid flowing to the wick by gravitational or capillary action; the second group are similar to the first group of patents except that instead of rock-wicks they embody an apron type of wick.

United States Patents Nos. 1 507 595, 3 198 396, 3 651 600 and 4 019 278 disclose liquid applicators comprising reservoirs having supply line(s) to a cylindrical reservoir with a transverse longitudinal axis. The cylindrical reservoir has a series of holes through to the outside surface which is covered with an absorbent material. These devices operate using gravity; absorbtion and pumping action.

Further, United States Patents Nos. 2 935 818 and 4 208 835 disclose liquid applicators comprising reservoirs and pumps to spray a liquid onto a revolving cylindrical applicator. The cylindrical applicator is covered with an absorbtive material which imparts the liquid to surfaces that come into contact with it.

United States Patent No. 3 320 694 describes a liquid applicator having a reservoir and pump means to spray liquid onto plants.

Australian Patent No. 463 851 describes a glove type liquid applicator having a reservoir and a pump in the form of a compressible bulb. The compressible bulb is valved to unidirectionally draw liquid from the reservoir and eventually delivers the liquid to the exterior surface of the glove from which the liquid is applied to surfaces that come into contact with the glove.

Australian Patent Application No. 62043/80 describes another type of rope-wick applicator in which two parallel cylindrical reservoirs each supply different ends of a series of parallel rope-wicks which extend from the cylindrical reservoirs at an angle to them. The cylindrical reservoirs are supplied from a master reservoir and supported on a frame such that when drawn by a tractor or the like with the axes of the cylindrical reservoirs perpendicular to the direction of movement the rope-wicks sweep diagonally across the weeds wiping herbicide or herbicide solution on to them.

The known applicators described above all have three major disadvantages. Because of the gravity or capilliary feed, an operator using those applicators cannot vary supply of herbicide when treating an area where the density of weeds is variable other than by varying tractor speed or, in the case of hand-held applicators going over and over thicker clumps of weeds. Again, because of the gravity or capilliary feed, the prior art applicators tend to allow the herbicide to drip on to the crop or desirable plants especially when the applicators are stationary. Herbicide must be mixed by operators of the prior art applicators with the resultant dangers in handling toxic materials. Spraying methods tend to apply liquid to all plants and are thus not as selective in their use to eradicate weeds, as compared with wiping methods. Spraying methods also endanger operators or other persons, by allowing these persons to come into contact with the airborne and windborne liquids and herbicides.

The improved applicators of the present invention allow the operators to vary the supply of liquid to the wicks and reduce the tendency of the applicators to drip. Most embodiments of the present invention allow commercial packs of herbicide to be used directly without any mixing. The preferred applicators of the invention also economise on the amount of herbicide or herbicide solution needed to fill the applicators to a sufficient degree for the applicators to function.

The applicators of the present invention are not necessarily restricted to rope-wicks. Other wicks such as cloth or sponge (natural or synthetic) or fibres or brushes can also be employed with the improved applicators of the present invention. In the context of this invention, the term "wick" means any material capable of absorbing a liquid by capilliary action and also capable of applying the liquid so absorbed to the foliage of plants by wiping the wick against the foliage.

In the first embodiment, the present invention provides an apparatus for applying chemicals to plants comprising a reservoir containing chemical solution or liquid chemical; wick means protruding from said apparatus to apply said chemical to plants to be treated by contact of the wick means with the plants and at least one supply tube in fluid communication with both said reservoir and said wick means; chracterised in that a portion of length of one end of each said supply tube which is remote from said reservoir passes via a sealed connection into at least one pressure chamber and ends therein and a portion of wick means communicates via another sealed connection with the said pressure chamber, said chemical when pressurised passing from said reservoir into said pressure chamber(s) to wet said wick means and raise the level of chemical in said pressure chamber(s) to occlude the extremity of said portion of length of said supply tube and compress the air within said pressure chamber(s), the apparatus being such that when the pressure is released expansion of said compressed air forces said chemical from the said pressure chamber along said supply tube towards said reservoir; and when the pressure in said reservoir is less than atmospheric pressure, said chemical in said wick means passes therefrom into said pressure chamber(s) and said supply tube.

A second embodiment of the invention provides an apparatus for applying chemical to plants wherein said pressure chamber is associated with a pressure sensor to sense the pressure therein; a pump to force said liquid from said reservoir and into said pressure chamber thereby pressurising said pressure chamber and wetting said wick means with said liquid; control means associated with said pump and with said pressure sensor adapted to maintain the pressure in said pressure chamber between predetermined limits whilst said apparatus is in operation and to reduce pressure from said reservoir on cessation of operation such that the pressure in said pressure chamber forces said liquid back along said supply line towards said reservoir and away from said wick means and such that when pressure in said reservoir is less than atmospheric pressure, liquid is withdrawn from said wick means along said supply line.

Preferred embodiments of the present invention are illustrated in the accompanying drawings in which:

Fig. 1 is a perspective rear of a hand-held wick applicator according to the present invention;

Fig. 2 is a cut away view of the lower portion of the applicator of Fig. 1 showing detail of the pressure chamber;

Fig. 3 is an alternative embodiment of the pressure chamber shown in Fig. 2 which can also be employed in large scale agricultural rope-wick applicators;

Fig. 4 is a section through an agricultural rope-wick applicator of the type generally described in Australian Patent Application No. 62043/80 or in U.S. Patents Nos. 4 187 638 and 4 219 964 but which includes the embodiment of Fig. 3;

Fig. 5 is a section through an agricultural rope wick applicator of the type generally described in Australian Patent Application No. 62043/80 or in U.S. Patents Nos. 4 187 638 and 4 219 964 but which includes the embodiment of Fig. 3 employing a different type of pressure chamber according to the invention;

Fig. 6 is a perspective view of an agricultural rope-wick applicator of the type generally described in Australian Patent Application No. 62 043/80 but which includes the embodiments of the present invention shown in Fig. 3;

Fig. 7 is a perspective view of an agricultural rope-wick applicator of the type generally described in U.S. Patents Nos. 4 187 638 and 4 219 964 but which includes the embodiments of the present invention shown in Fig. 3; and

Fig. 8 is a schematic of an agricultural rope-wick applicator according to the invention.

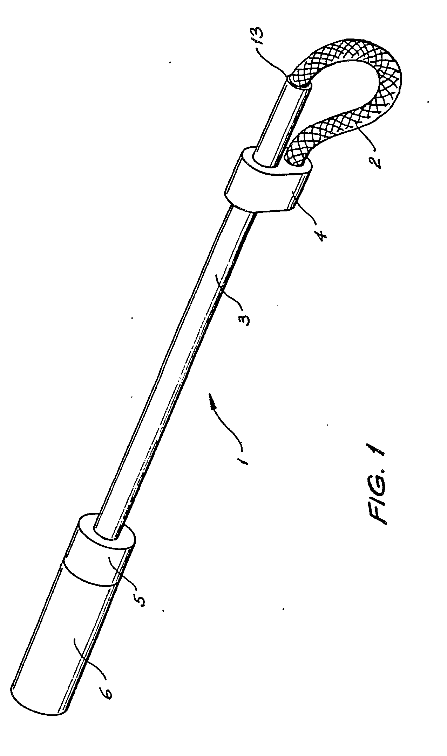

Referring to Fig. 1, the hand-held rope-wick applicator 1 includes a rope-wick 2 secured to a tubular member 3 and a slide 4. The slide 4 allows the shape of the wick 2 to be varied in order to suit different situations of use. A screw top 5 is located at the end of the tubular member 3 remote from the wick 2. A deformable reservoir 6 screws into screw top 5.

Squeezing deformable reservoir 6 forces liquid 10 through tube 9 and into pressure chamber 7. Once liquid level rises above the bottom or extremity 11 of tube 9 the air 12 in pressure chamber 7 is compressed. On release of pressure from the reservoir 6, compressed air 12 expands forcing liquid 10 back up tube 9 away from wick 2. On manipulation of reservoir 6, negative pressure is achieved in pressure chamber 7 and liquid 10 is withdrawn from wick 2.

When the slide 4 is pushed close to the wick end 13 of tubular member 3, the applicator is most suitable for "spotting" i.e., applying herbicides to broad leaf weeds such as dandelion (Taraxacum officinale) in lawns, by dabbing the wick 2 on the crown of the weed.

When the wick 2 is extended by pushing the slide 4 away from end 13, the appicator can be used with a scything action on taller weeds.

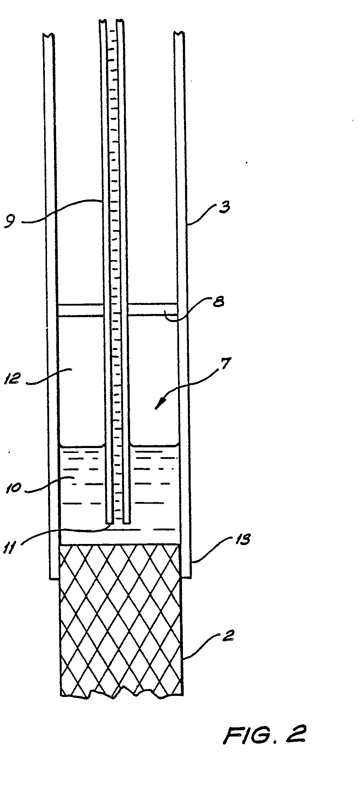

Fig. 2 shows pressure chamber 7 formed within tubular member 3 by membrane 8. Supply tube 9 is provided between pressure chamber 7 and screw top 5 (as in Fig. 1).

In the embodiment of Figs. 1 and 2 the wick 2 is glued into place in the tubular member 3 to provide leakproof passage into pressure chamber 7. Other methods of attachment known in the art such as staples, sleeves of heat shrinkable material, rubber grommets, screw pressure-caps, and the like, serve equally well. Supply tube 9 can be glued into place in membrane 8 or can be tight pressure fit to provide leakproof passage into pressure chamber 7.

Most types of rope are useful as wicks 2 in the present invention. However, synthetic ropes such as DACRON (Registered Trademark), nylon or polypropylene are preferred. The rope-wick as disclosed in United States Patent No. 4 328 640 is also suitable.

The materials used to construct the tubular member 3, membrane 8 and supply tube 9 can be any material which is compatible with herbicide solutions proposed to be used. Polyvinylchloride (PVC) has been found suitable.

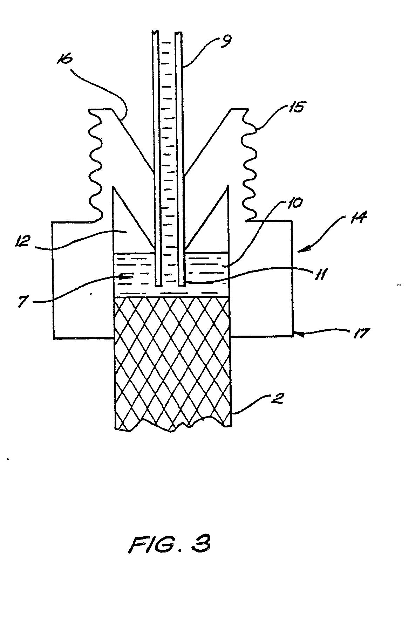

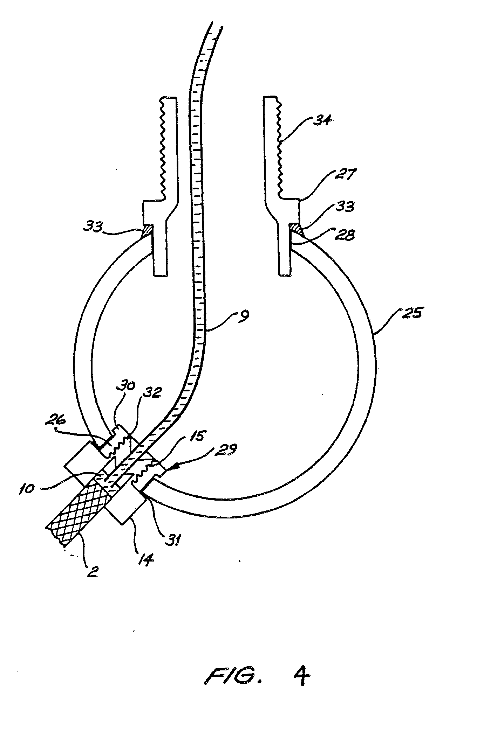

Fig. 3 illustrates a moulded end 14 for a rope-wick 2 having a pressure chamber 7 and screw thread 15 to facilitate fitting rope-wicks to either hand-held applicators as in Fig. 1 or larger agricultural applicators such as those illustrated in Figs. 4, 6, and 7. The top end 16 adjacent the screw thread is shaped for ease of insertion of the supply tube 9. The other end or wick mounting means 17 of the moulded end 14 can be conveniently knurled or formed in hexagon shape to facilitate insertion and removal of the moulded end 14 in/from a hand-held or agricultural applicator.

In Fig. 3 as in the embodiments of Figs. 1 and 2, supply of liquid 10 under pressure past lower end 11 of supply tube 9, compresses air 12 in pressure chamber 7. Release of pressure on liquid 10 permits air 12 to expand and force liquid 10 back through supply tube 9 away from wick 2. Liquid 10 is removed from wick 2 as negative pressure is achieved in pressure chamber 7.

In Fig. 3 as in Figs. 1 and 2, the wick 2 and supply tube 9 can be secured to the moulded end 14 by any suitable means.

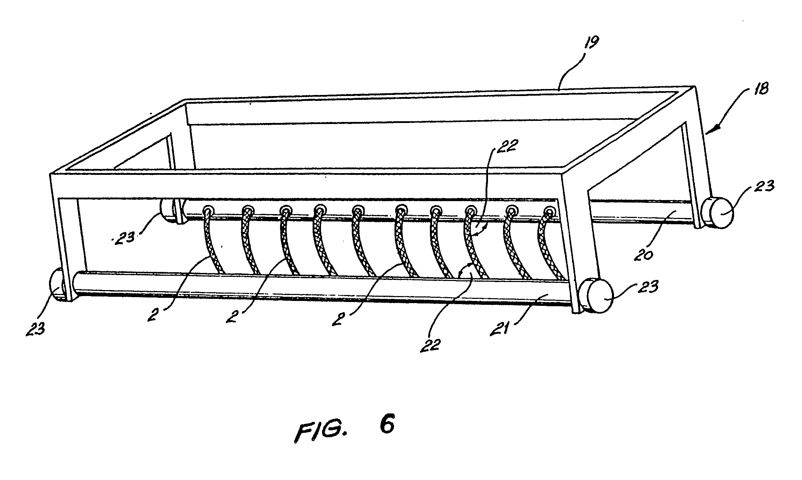

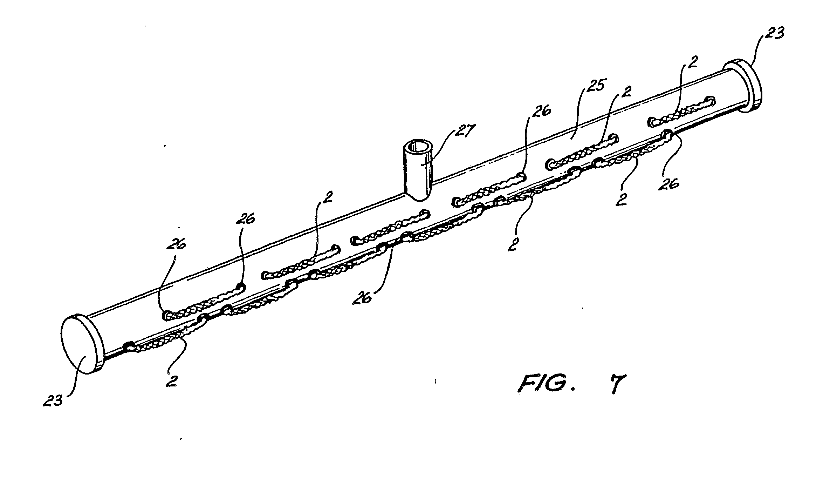

Fig. 4 is a cross section through any one of booms 20, 21 and 25 (as illustrated in Figs. 6 and 7). The description which follows relates to an embodiment such as that of Fig. 7 but is equally applicable to an embodiment such as that of Fig. 6. A boom 25 of circular cross section has openings 28 and 26 to accommodate a filling neck 27 and adaptor 29 respectively. A number of adaptors 29 are employed to accommodate a plurality of wicks 2, one or more filling necks can be used to suit various requirements. The adaptor 29 has flanges 30, 31 to seal opening 26 and screw thread 32 which corresponds with screw thread 15 of moulded end 14. The moulded end 14 which carries wick 2 and supply tube 9 is as described in Fig. 3. The filling neck 27 is secured in opening 28 by welds 33 and has a screw thread 34 to take one end of a protective cover (not shown) for the supply tubes 9.

In the embodiment of Fig. 4, it is convenient to supply liquid 10 from the reservoir (not shown) by a main supply tube (not shown) of larger diameter than supply tubes 9, to a sub-reservoir which supplies tubes 9.

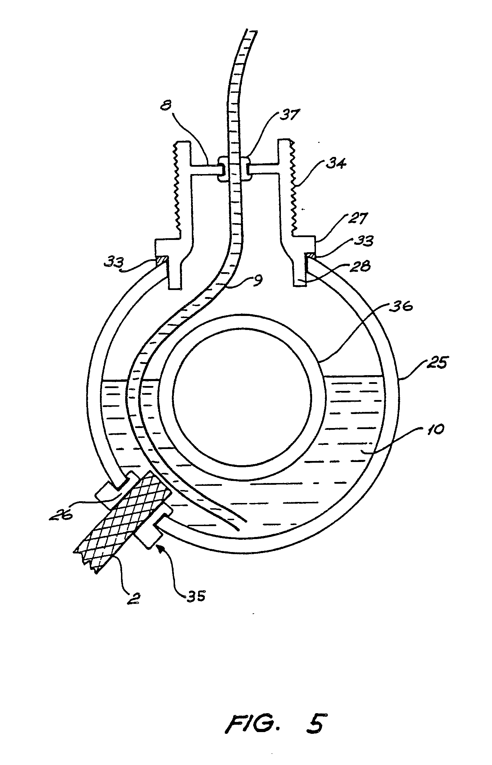

Fig. 5 illustrates a further preferred embodiment as an alternative to Fig. 4 and which is adaptable to the applicators of Figs. 6, 7 and 8. A boom 25 of circular cross section has openings 28 and 26 to accommodate filling neck 27 and grommet 35. As with the embodiment of Fig. 4, a number of grommets 35 are employed to hold a plurality of wicks 2 and one or more filling necks 27 can be used. A pipe 36 is affixed concentric within the boom 25 to reduce the volume of liquid 10 held within the boom. Filling neck 27 is secured by welds 33 and has screw thread 34 for securing a protective cover (not shown) for supply tubes 9 as described in Fig. 4. The supply tube 9 is secured within filling neck 27 by membrane 8 and grommet 37 so that the boom 25 functions as a pressure chamber such as is described with reference to Figs. 2 and 3.

It should be noted that the embodiment of Fig. 5 tends to be cheaper to construct than that of Fig. 4. This is due to the use of a single supply line and a single pressure chamber.

Fig. 6 shows a double boom rope-wick applicator 18 having a frame 19, front boom 20 and rear boom 21. A series of generally parallel rope-wicks 2 are secured between the booms 20, 21, preferably at an angle 22 of between 30° and 60° to each boom. This ensures that the wicks 2 wipe along the weeds for longer contact time than with the embodiment of Fig. 7. Each boom 20, 21 has two end caps 23. The wicks 2 may be affixed and supplied with liquid as hereinbefore described in relation to Figs. 4 and 5.

A single boom rope-wick applicator 24 is shown in Fig. 7. The boom 25 is provided with a series of wicks 2 parallel to the axis of the boom and emanating from openings 26. The boom 25 has end caps 23 and filling neck 27. The wicks 2 are affixed and supplied with liquid as described hereinbefore in Figs. 4 and 5.

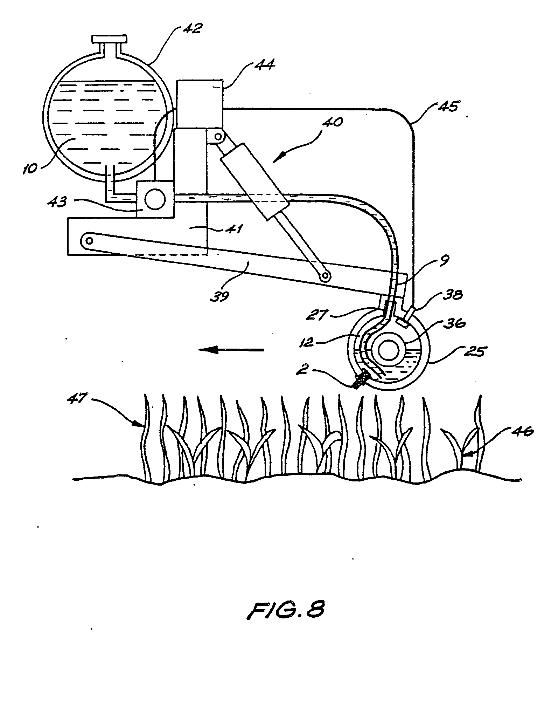

Fig. 8 illustrates a preferred agricultural embodiment of the present invention. The boom 25 is as described in Fig. 5 including filling neck 27, wicks 2, concentric pipe 36 and supply tube 9 and also has a pressure sensor 38. The boom 25 is mounted through a pivoted bar 39 and hydraulic lift assembly 40 on the frame 41 of a tractor (not shown).

The frame 41 also carries a reservoir 42 containing liquid herbicide 10, a pump 43 in supply tube 9 between the reservoir 42 and the boom 25. The pump 43 is actuated by control 44 which receives output of pressure sensor 38 via line 45. The control 44 is also associated with a sensor (not shown) which detects movement of the tractor. In use the boom 25 is drawn by the tractor.

In use the boom 25 is drawn by the tractor across the paddock with its axis transverse to the rows of crop. The hydraulic lift assembly 40 enables the elevation of the boom 25 to be set slightly above the level of the crop plants 46 but below the level of the weeds 47 so that the herbicide liquid 10 is applied by wicks 2 to the portions of the weeds which grow above the level of the crops. The control 44 can be set such that the pump 43 will operate to maintain the pressure within the pressure chamber (boom 25) between preselected upper and lower limits. It is preferred that the pump 43 be a reversible type so that when the tractor stops, the pressure in the supply tube can be reduced so that the compressed air 12 with the aid of the pump 43 operating in reverse forces herbicide liquid 10 out of the boom 25 to minimise drip from the wicks 2. On further operation of the pump 43 in reverse, herbicide liquid is sucked back from the wicks 2 into the boom 25. Alternatively, supply tube 9 can be fitted with a pressure release valve which is actuated by the control 44 when the tractor stops. In this case provision for return of overflow liquid to the reservoir 42 should be made.

In embodiments of the invention where the moulded ends of Fig. 3 are fitted to booms, a portion of the moulded ends may be fitted with pressure sensors in their pressure chambers and the control adapted to read and act upon a mean pressure in the pressure chambers.

It is especially preferred that supply of liquid herbicide can be separately controlled to sections of the boom so that the operator can adjust herbicide supply to suit varying weed configurations in pasture or row crop situations.

The control 44 preferably includes a provision such that the operator can over-ride the settings thereon so that when treating paddocks where weed distribution is variable, supply of herbicide can be increased where weeds grow thickly or in clumps, or can be reduced by reversing pump 43 when passing over weed-free tracts of land.

Any herbicide which acts by contact with foliage and translocates throughout the plant can be used with applicators of the present invention.

Glyphosate (N-(phosphonomethyl) glycine) which is sold under the registered trade marks ZERO and ROUNDUP is a systemic herbicide which is capable of controlling most broad leaf and grass weeds and is most suitable for use with the applicators and method of the present invention.

Dicamba (3,6-dichloro-o-anisic acid) sold under the registered trade mark BANVEL is also most suitable for use in conjunction in the present invention.

**Claims**

1. An apparatus for applying a liquid to plants, said apparatus comprising a reservoir (6, 42) containing said liquid (10); wick means (2) protruding from said apparatus to apply said liquid (10) to plants and at least one supply tube (9) in fluid communication with both said reservoir (6, 42) and said wick means (2); characterised in that a portion of length of one end of each said supply tube (9) which is remote from said reservoir (6) passes via a sealed connection into at least one pressure chamber (7, 20, 21, 25) and ends therein, and a portion of wick means (2) communicates via another sealed connection with the said pressure chamber (7, 20, 21, 25), said liquid (10) when pressurised passing from said reservoir (6, 42) into said pressure chamber(s) (7, 20, 21, 25) to wet said wick means (2) and raise the level of liquid (10) in said pressure chamber (7, 20, 21, 25) to occlude the extremity (11) of said portion of length of said supply tube (9) and compress the air (12) within said pressure chamber(s) (7, 20, 21, 25), the apparatus being such that when the pressure is released expansion of said compressed air (12) forces said liquid (10) from the said pressure chamber (7, 20, 21, 25) along said supply tube (9) towards said reservoir (6, 42); and when the pressure in said reservoir (6, 42) is less than atmospheric pressure said liquid (10) in said wick means (2) passes therefrom into said pressure chamber (7, 20, 21, 25) and then into said supply tube (9).

2. Apparatus as defined in claim 1, wherein said reservoir (6) is deformable.

3. Apparatus as defined in claim 2, wherein said liquid (10) is forced under pressure from said reservoir (6) by deformation thereof.

4. Apparatus as defined in claim 1 or 2 or 3, wherein said supply tube (9) is embodied within a tubular member (3) having a first end and a second end (13) and including attachment means and a screw top (5) for said reservoir (6) at said first end, and pressure chamber (7) and wick means (2) at said second end (13).

5. Apparatus as defined in claim 4, wherein said pressure chamber (7) is formed within said tubular member (3), by a membrane (8) having the same cross-section as the interior of said tubular member (3) and which is suitably located to create said pressure chamber (7), said pressure chamber (7) having leakproof communicable passage with said wick means (2), and said supply tube (9) having leakproof communicable passage with the interior of said pressure chamber (7) through said membrane (8).

6. Apparatus as defined in claim 1 or 2 or 3, wherein said pressure chamber (7) is formed within a moulded end (14), said moulded end (14) including screw thread (15) to facilitate fitment to hand-held or larger agricultural applicators, said pressure chamber (7) having a supply tube (9) sealingly passing into said adaptor (14) to terminate within said pressure chamber (7), and said moulded end (14) having a wick mounting means (17) engaging said wick means (2) so that said wick means (2) is partly located within said pressure chamber (7).

7. Apparatus as defined in any one of claims 1 to 6, wherein said wick means (2) is slidably adjustable whereby said wick means (2) is adapted for "spotting" (as hereinbefore defined) in one position, and adapted to scything.

8. Apparatus as defined in claim 1, wherein said pressure chamber (25) is associated with a pressure sensor (38) to sense the pressure therein; a pump (43) to force said liquid (10) from said reservoir (42) and into said pressure chamber (25) thereby pressurising said pressure chamber (25) and wetting said wick means (2) with said liquid (10); control means (44) associated with said pump (43) and with said pressure sensor (38) adapted to maintain the pressure in said pressure chamber (25) between predetermined limits whilst said apparatus is in operation and to reduce pressure from said reservoir (42) on cessation of operation such that the pressure in said pressure chamber (25) forces said liquid (10) back along said supply tube (9) towards said reservoir (42) and away from said wick means (2) and such that when pressure in said reservoir (42) is less than atmospheric pressure, liquid (10) is withdrawn from said wick means (2) along said supply tube (9).

9. Apparatus as defined in claim 8, wherein a plurality of wick means (2) are mounted on a framework (19); at least one supply tube (9) connects said reservoir (42) with said plurality of wick means (2) and at least one pressure chamber (7, 20, 21, 25) is in communication with said plurality of wick means (2).

10. An apparatus as defined in claim 9, wherein said framework (19) comprises at least one pair of elongated parallel booms (20, 21), having a plurality of said wick means (2) mounted between each pair of parallel booms (20, 21).

11. An apparatus as defined in claim 10, wherein said wick means (2) are mounted between said parallel booms (20) at angles (22) ranging between 30° to 60° to a longitudinal axis of said booms (20, 21).

12. An apparatus as defined in claim 10 or claim 11, wherein either or both said booms (20, 21) embody said pressure chamber(s) (7).

13. An apparatus as defined in claim 10 or claim 11 wherein each said wick means (2) has associated therewith one or two said pressure chamber(s) (7).

14. An apparatus as defined in claim 9, wherein said framework (19) is at least one elongaged boom (25), having a transverse longitudinal axis, said boom (25) having a plurality of wick means (2) mounted parallel to said transverse longitudinal axis, wherein both ends of said wick means (2) have communication with the interior of said boom (25).

15. An apparatus as defined in claim 14, wherein said boom (25) embodies said pressure chamber (7).

16. An apparatus as defined in claim 14 wherein each said wick means (2) has associated therewith one or two said pressure chamber(s) (7).

**Revendications**

1. Appareil pour appliquer un liquide sur des plantes, ledit appareil comprenant un réservoir (6, 42) contenant ledit liquide (10); des moyens à mèche (2) sortant dudit appareil pour appliquer ledit liquide (10) à des plantes et au moins un tube (9) d'alimentation en communication de fluide avec, à la fois, ledit réservoir (6, 42) et lesdits moyens à mèche (2); caractérisé en ce qu'une partie de la longueur d'une extrémité de chaque tube (9) d'alimentation qui est éloignée dudit réservoir (6) pénètre, par l'intermédiaire d'une liaison fermée hermétiquement, dans au moins une chambre de pression (7, 20, 21, 25) et y aboutit, et une partie des moyens à mèche (2) communique, par une autre liaison fermée hermétiquement, avec ladite chambre de pression (7, 20, 21, 25) ledit liquide (10), lorsqu'il est sous pression, passant dudit réservoir (6, 42) dans la ou lesdites chambres de pression (7, 20, 21, 25) afin de mouiller lesdits moyens à mèche (2) et de faire monter le niveau du liquide (10) dans ladite chambre de pression (7, 20, 21, 25) pour boucher l'extrémité (11) dudit tronçon de longueur dudit tube (9) d'alimentation et comprimer l'air (12) à l'intérieur de la ou desdites chambres de pression (7, 20, 21, 25), l'appareil étant tel que, lorsque la pression est relâchée, une détente dudit air comprimé (12) force ledit liquide (10) de ladite chambre de pression (7, 20, 21, 25) le long dudit tube (9) d'alimentation vers ledit réservoir (6, 42); et lorsque la pression dans ledit réservoir (6, 42) est inférieure à la pression atmosphérique, ledit liquide (10) présent dans lesdits moyens à mèche (2) passe de ces derniers dans ladite chambre de pression (7, 20, 21, 25) puis dans ledit tube (9) d'alimentation.

2. Appareil selon la revendication 1, dans lequel ledit réservoir (6) est déformable.

3. Appareil selon la revendication 2, dans lequel ledit liquide (10) est forcé sous pression à partir dudit réservoir (6) par déformation de ce dernier.

4. Appareil selon la revendication 1 ou 2 ou 3, dans lequel ledit tube (9) d'alimentation est incorporé dans un élément tubulaire (3) ayant une première extrémité et une seconde extrémité (13) et comprenant des moyens de fixation et un dessus à vis (5) pour ledit réservoir (6) à ladite première extrémité, et une chambre (7) de pression et des moyens à mèche (2) à ladite seconde extrémité (13).

5. Appareil selon la revendication 4, dans lequel ladite chambre (7) de pression est formée à l'intérieur dudit élément tubulaire (3) par une membrane (8) ayant la même section transversale que l'intérieur dudit élément tubulaire (3) et qui est convenablement disposée pour établir ladite chambre (7) de pression, ladite chambre (7) de pression comportant un passage pouvant communiquer sans fuite avec lesdits moyens à mèche (2), et ledit tube (9) d'alimentation comportant un passage pouvant communiquer sans fuite avec l'intérieur de ladite chambre (7) de pression à travers ladite membrane (8).

6. Appareil selon la revendication 1 ou 2 ou 3, dans lequel ladite chambre (7) de pression est formée à l'intérieur d'une extrémité moulée (14), ladite extrémité moulée (14) comprenant un filet de vis (15) pour faciliter l'ajustement sur des applicateurs agricoles portatifs ou plus gros, ladite chambre (7) de pression ayant un tube (9) d'alimentation pénétrant de façon étanche dans ledit adaptateur (14) afin d'aboutir à l'intérieur de ladite chambre (7) de pression, et ladite extrémité moulée (14) comportant des moyens (17) de montage de mèche en prise avec lesdits moyens à mèche (2) afin que lesdits moyens à mèche (2) soient partiellement positionnés à l'intérieur de ladite chambre (7) de pression.

7. Appareil selon l'une quelconque des revendications 1 à 6, dans lequel lesdits moyens à mèche (2) peuvent être réglés de façon coulissante afin que lesdits moyens à mèche (2) soient conçus pour un "mouchetage" (tel que défini précédemment) dans une position, et conçus pour un fauchage.

8. Appareil selon la revendication 1, dans lequel ladite chambre (25) de pression est associée à un capteur (38) de pression destiné à y capter la pression; une pompe (43) destinée à forcer ledit liquide (10) dudit réservoir (42) dans ladite chambre (25) de pression afin de mettre sous pression ladite chambre (25) de pression et de mouiller lesdits moyens à mèche (2) avec ledit liquide (10); des moyens de commande (44) associés à ladite pompe (43) et audit capteur (38) de pression et conçus pour maintenir la pression dans ladite chambre (25) de pression entre des limites prédéterminées pendant que ledit appareil est en fonctionnement et pour réduire la pression provenant dudit réservoir (42) lorsque le fonctionnement cesse afin que la pression régnant dans ladite chambre (25) de pression refoule ledit liquide (10) par ledit tube (9) d'elimentation vers ledit réservoir (42) et l'éloigne desdits moyens à mèche (2), et de manière que, lorsque la pression régnant dans ledit réservoir (42) est inférieure à la pression atmosphérique, le liquide (10) soit aspiré desdits moyens à mèche (2) en passant par ledit tube (9) d'alimentation.

9. Appareil selon la revendication 8, dans lequel plusieurs moyens à mèche (2) sont montés sur un châssis (19); au moins un tube (9) d'alimentation raccorde ledit réservoir (42) auxdits moyens à mèche (2) et au moins une chambre (7, 20, 21, 25) de pression est en communication avec lesdits moyens à mèche (2).

10. Appareil selon la revendication 9, dans lequel ledit châssis (19) comprend au moins une paire de flèches parallèles allongées (20, 21) entre lesquelles sont montés plusieurs desdits moyens à mèche (2).

11. Appareil selon la revendication 10, dans lequel lesdits moyens à mèche (2) sont montés entre lesdites flèches parallèles (20) sous des angles (22) compris entre 30° et 60° avec un axe longitudinal desdits flèches (20, 21).

12. Appareil selon la revendication 10 ou la revendication 11, dans lequel l'une desdites flèches ou les deux flèches (20, 21) comprennent la ou lesdites chambres de pression (7).

13. Appareil selon la revendication 10 ou la revendication 11, dans lequel une ou deux desdites chambres (7) de pression sont associées à chacun desdits moyens à mèche (2).

14. Appareil selon la revendication 9, dans lequel ledit châssis (19) est au moins une flèche allongée (25) ayant un axe longitudinal transversal, ladite flèche (25) comportant plusieurs moyens à mèche (2) montés parallèlement audit axe longitudinal transversal, les deux extrémités desdits moyens à mèche (2) communiquant avec l'intérieur de ladite flèche (25).

15. Appareil selon la revendication 14, dans lequel ladite flèche (25) comprend ladite chambre (7) de pression.

16. Appareil selon la revendication 14, dans lequel une ou deux desdites chambres (7) de pression sont associées à chacun desdits moyens à mèche (2).

**Patentansprüche**

1. Vorrichtung zum Aufbringen einer Flüssigkeit auf Pflanzen, wobei die Vorrichtung ein die Flüssigkeit (10) enthaltendes Reservoir (6, 42) aufweist, ferner von der Vorrichtung wegragende Dochtmittel (2) zum Aufbringen der Flüssigkeit (10) auf die Pflanzen und zumindest ein Zuführrohr (9) in Flüssigkeitsaustausch mit dem Reservoir (6, 42) und den Dichtmitteln (2), dadurch gekennzeichnet, daß eine Teillänge des einen, von dem Reservoir (6) entfernten Endes des Zuführrohres (9) durch einen leckdichten Anschluß in mindestens eine Druckkammer (7, 20, 21, 25) hineinreicht und in dieser endet und daß ein Teil der Dochtmittel (2) über einen anderen leckdichten Anschluß mit der Druckkammer (7, 20, 21, 25) kommuniziert, daß die Flüssigkeit (10), wenn sie unter Druck gesetzt wird, von dem Reservoir (6, 42) in die Druckkammer(n) (7, 20, 21, 25) fließt, um die Dochtmittel (2) anzufeuchten und das Niveau der Flüssigkeit (10) in der Druckkammer (7, 20, 21, 25) zu erhöhen, so daß dabei das äußerste Ende (11) der Teillänge des Zuführrohres (9) bedeckt und die Luft (12) in der oder den Druckkammern (7, 20, 21, 25) komprimiert wird, wobei die Vorrichtung so ausgebildet ist, daß dann, wenn der Druck nachgelassen wird, durch die Ausdehnung der komprimierten Luft (12) die Flüssigkeit (10) von der Druckkammer (7, 20, 21, 25) längs des Zuführrohres (9) in Richtung auf das Reservoir (6, 42) getrieben wird und daß dann, wenn der Druck in dem Reservoir (6, 42) kleiner als der Atmosphärendruck ist, Flüssigkeit (10) in dem Dochtmittel (2) aus diesem in die Druckkammer (7, 20, 21, 25) und dann in das Zuführrohr (9) fließt.

2. Vorrichtung nach Anspruch 1, dadurch gekennzeichnet, daß das Reservoir (6) deformierbar ist.

3. Vorrichtung nach Anspruch 2, dadurch gekennzeichnet, daß die Flüssigkeit (10) unter Druck aus dem Reservoir durch dessen Deformation getrieben wird.

4. Vorrichtung nach Anspruch 1, 2 oder 3, dadurch gekennzeichnet, daß das Zuführrohr (9) in einem rohrförmigen Glied (3) eingebettet ist, welches ein erstes und ein zweites Ende (13) aufweist und Befestigungsmittel sowie einen Schraubdeckel (5) für das Reservoir (6) an seinem einen Ende trägt und die Druckkammer (7) sowie die Dochtmittel (2) an seinem zweiten Ende (13) einschließt.

5. Vorrichtung nach Anspruch 4, dadurch gekennzeichnet, daß die Druckkammer (7) innerhalb des rohrförmigen Gliedes (3) gebildet ist durch eine Membran (8), die den gleichen Querschnitt wie der Innenraum des rohrförmigen Gliedes (3) hat und zur Bildung der Druckkammer (7) geeignet angeordnet ist, und daß die Druckkammer (7) eine leckdichte Verbindungspassage zu den Dochtmitteln (2) und das Zufürrohr (9) eine leckdichte, durch die Membran (8) reichende Verbindungspassage zu dem Innenraum der Druckkammer (7) aufweisen.

6. Vorrichtung nach Anspruch 1 oder 2 oder 3, dadurch gekennzeichnet, daß die Druckkammer (7) innerhalb eines geformten Endes (14) liegt, welches ein Schraubgewinde (15) umfaßt, um die Befestigung mit handgehaltenen oder größeren landwirtschaftlichen Applikatoren zu erleichtern, daß die Druckkammer (7) ein Zuführrohr (9) aufweist, das abgedichtet in das geformte Ende (14) reicht und innerhalb der Druckkammer (7) endet, und daß das geformte Ende (14) ein Dochtbefestigungsmittel (17) aufweist, das in Eingriff steht mit den Dochtmitteln (2), so daß die Dochtmittel (2) teilweise innerhalb der Druckkammer (7) gelegen sind.

7. Vorrichtung nach einem der Ansprüche 1 bis 6, dadurch gekennzeichnet, daß die Dochtmittel (2) gleitend montiert und einstellbar sind, wodurch die Dochtmittel (2) in einer Stellung zum "Spotten" (wie oben definiert) und sonst zum Streichen geeignet sind.

8. Vorrichtung nach Anspruch 1, dadurch gekennzeichnet, daß die Druckkammer (25) mit einem Drucksensor (38) zum Bestimmen des Druckes in der Druckkammer (25) ausgerüstet ist, daß eine Pumpe (40) vorgesehen ist, um die Flüssigkeit (10) aus dem Reservoir (42) und in die Druckkammer (25) zu treiben, wobei die Druckkammer (25) mit Druck beaufschlagt und die Dochtmittel (2) mit Flüssigkeit (10) befeuchtet werden, und daß eine Steuerung (44) mit der Pumpe (43) und dem Drucksensor (38) verbunden ist, die den Druck in der Druckkammer (25) während des Betriebes der Vorrichtung innerhalb vorbestimmter Grenzen hält und den von dem Reservoir (42) ausgehenden Druck bei Betriebsende reduziert, so daß der Druck in der Druckkammer (25) die Flüssigkeit (10) längs des Zuführrohres (9) zurück zum Reservoir (42) und weg von den Dochtmitteln (2) treibt, und das so, daß dann, wenn der Druck in dem Reservoir (42) kleiner als Atmosphärendruck ist, die Flüssigkeit (10) aus den Dochtmitteln (2) längs des Zuführrohres (9) zurückgesaugt wird.

9. Vorrichtung nach Anspruch 8, dadurch gekennzeichnet, daß mehrere Dochtmittel (2) auf einem Rahmengestell (19) montiert sind, daß zumindest ein Versorgungsrohr (9) das Reservoir (42) mit den mehreren Dochtmitteln verbindet und daß zumindest eine Druckkammer (7, 20, 21, 25) mit den mehreren Dochtmitteln (2) in Verbindung steht.

10. Vorrichtung nach Anspruch 9, dadurch gekennzeichnet, daß das Rahmengestell (19) zumindest ein Paar längliche parallele Stangen (20, 21) aufweist, wobei jeweils zwischen jedem Paar von parallelen Stangen (20, 21) mehrere Dochtmittel (2) montiert sind.

11. Vorrichtung nach Anspruch 10, dadurch gekennzeichnet, daß die Dochtmittel (2) zwischen den parallelen Stangen (20) unter Winkeln zwischen 30° und 60° zu der Längsachse der Stangen (20, 21) montiert sind.

12. Vorrichtung nach Anspruch 10 oder 11, dadurch gekennzeichnet, daß eine oder beide Stangen (20, 21) die Druckkammer(n) (7) aufnehmen.

13. Vorrichtung nach Anspruch 10 oder 11, dadurch gekennzeichnet, daß jedem Dochtmittel (2) eine oder zwei Druckkammern (7) zugeordnet sind.

14. Vorrichtung nach Anspruch 9, dadurch gekennzeichnet, daß das Rahmengestell (19) mindestens eine längliche Stange (25) mit einer quer gerichteten Längsachse aufweist und daß diese Stange (25) mehrere Dochtmittel (2) trägt, die parallel zu der querverlaufenden Längsachse montiert sind, wobei beide Enden der Dochtmittel (2) mit dem Innenraum der Stange kommunizieren.

15. Vorrichtung nach Anspruch 14, dadurch gekennzeichnet, daß die Stange (25) die Druckkammer (7) aufnimmt.

16. Vorrichtung nach Anspruch 14, dadurch gekennzeichnet, daß jedem Dochtmittel (2) eine oder zwei Druckkammer(n) (7) zugeordnet sind.

FIG. 1

0 074 230

FIG. 2

FIG. 3

FIG. 4

FIG. 5

FIG. 6

FIG. 7

0 074 230

FIG.8